# EUROPEAN PATENT APPLICATION

(11) **EP 1 537 990 A2**
(43) Date of publication of application: **08.06.2005**
(21) Application number: 04257266.9
(22) Date of filing: 23.11.2004
(51) Int. Cl.: B32B 27/06, B65D 77/20, B65D 51/20, C08L 23/00

(54) **Easy-open container and closure assembly therefor**

(30) Priority: 24.11.2003 US 720710
(71) Applicant: Sonoco Development, Inc., Hartsville, South Carolina 29550 (US)
(72) Inventor: Varadarajan, Krishnaraju, Florence South California 29506 (US)
(74) Representative: Moreland, David, Dr.

(57) **Abstract**

A container (10) comprises a container body (100) defining a top opening, a sealing surface (23) being defined on the container body encircling the top opening, and a closure (30) sealed to the sealing surface by a heat-seal material comprising a blend of two different acidic ionomers having respectively higher and lower acid content such that the heat-seal material has an acid content intermediate between that of the two different ionomers, whereby the resulting heat seal strikes a balance between oil-resistance and age-up.

## Description

### BACKGROUND OF THE INVENTION

### 1. Technical Field

The invention relates generally to easy-open containers for consumer products, wherein the container is sealed closed by heat-sealing a flexible membrane closure to a metal end, flange, or rim that encircles the top opening of the container. The invention more particularly relates to such a container employing a heat-seal material composed of an acidic ionomer.

### 2. Description of Related Art

There is a class of easy-open product containers that are sealed closed by heat-sealing a membrane closure to a metal end or to a flange or rim that encircles the open top of the container. Such containers, for example, are marketed under the ULTRASEAL® trademark for containing various food products. In the case of containers having a metal end, the metal end generally comprises tin-plate steel, and its upper surface is coated with a heat-seal material The metal end is double-seamed to a flange formed on the container. The membrane closure can have various constructions, often including a foil layer as a barrier, and/or one or more polymer layers. The lower surface of the membrane closure has a heat-seal material on it for heat-sealing to the heat-seal material coated on the metal end.

In prior seals of this type, the heat-seal material that has been used is an acidic ionomer, in particular an ethylene methacrylic acid ionomer (i.e., a copolymer of ethylene and methacrylic acid wherein the methacrylic acid groups are partially neutralized with a cation, typically zinc or sodium ions), such as the composition marketed under the SURLYN® trademark by DuPont. Current ionomer heat-seal material used in this sealing application has an acid content of about 15%. This relatively high acid content provides grease-resistance to the bond between the membrane closure and the metal end. However, the bond tends to become stronger with aging, to the point that it can become very difficult for the consumer to remove the membrane closure from the metal end.

### BRIEF SUMMARY OF THE INVENTION

It has been discovered that a higher acid content of the heat-seal material promotes such bond-strengthening with age (referred to as the "age-up" phenomenon). The invention addresses this problem by providing a heat-seal material comprising a blend of two different acidic ionomers of respectively higher and lower acid content such that the resulting blend has an intermediate acid content. In one embodiment, the more-acidic ionomer has an acid content of about 15% and the less-acidic ionomer has an acid content of about 7%, and the blend contains approximately equal proportions of the two ionomers, such that the acid content of the blend is about 11 %. The reduced acid content of the resulting blend leads to a reduction in the age-up problem, while still retaining sufficient oil- and grease-resistance for the seal.

In a preferred embodiment, the more-acidic ionomer comprises an ethylene methacrylic acid ionomer (i.e., a copolymer of ethylene and methacrylic acid wherein the methacrylic acid groups are partially neutralized with a cation, typically zinc or sodium ions), such as the composition marketed under the SURLYN® trademark by DuPont. The less-acidic ionomer comprises an ethylene acrylic acid ionomer (i.e., a copolymer of ethylene and acrylic acid wherein the acrylic acid groups are partially neutralized with a cation, typically zinc or sodium ions), such as the composition marketed under the TRANCEND® trademark by DuPont.

A container in accordance with one embodiment of the invention comprises a container body defining a top opening, a sealing surface being defined on the container body encircling the top opening, and a closure sealed to the sealing surface by a heat-seal material comprising a blend of two different acidic ionomers having respectively higher and lower acid content such that the heat-seal material has an acid content intermediate between that of the two different ionomers, whereby the resulting heat seal strikes a balance between oil-resistance and age-up.

A container in accordance with another embodiment of the invention comprises a container body defining a top opening, a metal end attached to the container body encircling the top opening, and a membrane closure sealed to the metal end by a heat-seal material comprising a blend of two different acidic ionomers having respectively higher and lower acid content such that the heat-seal material has an acid content intermediate between that of the two different ionomers.

### BRIEF DESCRIPTION OF THE SEVERAL VIEWS OF THE DRAWING(S)

Having thus described the invention in general terms, reference will now be made to the accompanying drawings, which are not necessarily drawn to scale, and wherein:
FIG. 1 is a perspective view of a container in accordance with one embodiment of the invention;
FIG. 2 is a cross-sectional view of a metal end and membrane closure for a container such as shown in FIG. 1;
FIG. 3 is an enlarged, exploded fragmentary view of the metal end and membrane closure in the vicinity of the heat seal therebetween; and
FIG. 4 is a fragmentary cross-sectional view through the container taken along line 4-4 in FIG. 1.

### DETAILED DESCRIPTION OF THE INVENTION

The present inventions now will be described more fully hereinafter with reference to the accompanying drawings, in which some, but not all embodiments of the invention are shown. Indeed, these inventions may be embodied in many different forms and should not be construed as limited to the embodiments set forth herein; rather, these embodiments are provided so that this disclosure will satisfy applicable legal requirements. Like numbers refer to like elements throughout.

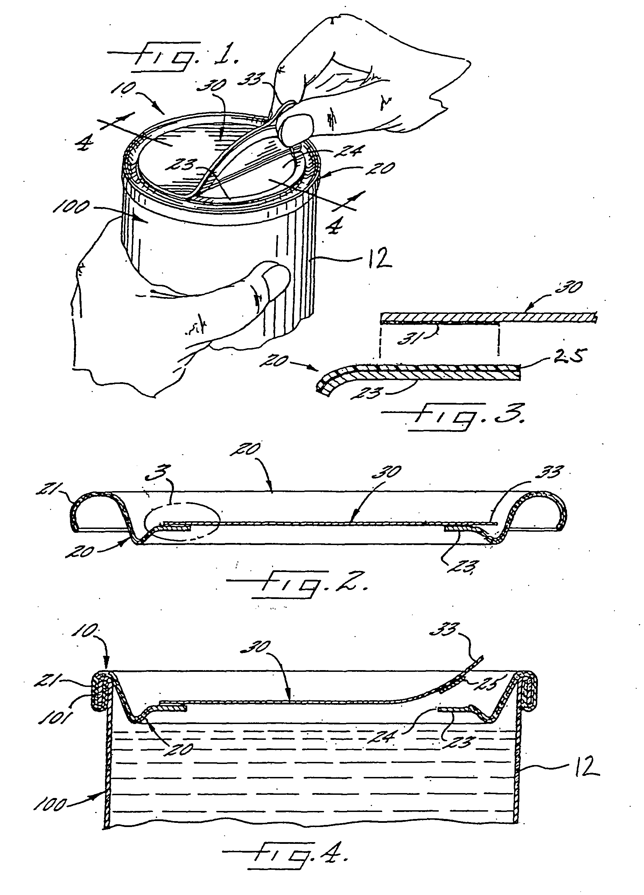

A container **10** in accordance with one embodiment of the invention is depicted in FIGS. 1-4. The container includes a container body **100** that can have various constructions. Typically the container will include a generally tubular or conical side wall **12** whose upper end defines a top opening of the container. The side wall **12** can be formed of various materials, including but not limited to plastic (e.g., the container body can be thermoformed or blow-molded from polymer material(s)) or composite (e.g., the side wall can be formed of paperboard laminated with an impervious liner of various constructions). The container body includes a flange **101** (FIG. 4) that projects generally radially outwardly from the upper edge of the side wall **12.**

An end member **20** is attached to the container body **100** by double-seaming with the flange **101**. With reference to FIG. 2 in particular, the end member **20** is a generally ring-shaped structure. The radially outer edge portion of the end member **20** has a curl **21** that defines a generally annular channel for receiving the flange **101** on the container body. The end member **20** is formed of a material that renders it plastically deformable. The curl **21** on the end member, along with the flange **101,** is deformed or rolled under using conventional double-seaming equipment to form a hermetic double seam as shown in FIG. 4. The end member includes a radially inner portion or ledge **23** that extends radially inwardly from the double seam and defines a central opening **24** through which access to the interior of the container can be had. The radially inner edge of the end member can be rolled (not shown), if desired, such as shown in U.S. Patent No. 5,752,614, which is incorporated herein by reference.

The end member **20** can be formed of various materials, as long as it is plastically deformable so as to accommodate the double-seaming operation. For example, the end member can be formed of a suitable metal such as aluminum or tin-plate steel of relatively large thickness, e.g., about 0.005 to about 0.025 inch. Metal end members on food containers typically are coated with a suitable coating (not shown) to prevent direct contact between the metal and the container contents. An alternative end member material is composite material comprising a relatively thin metal foil of aluminum or steel laminated with one or more polymer layers, such as disclosed in U.S. Patent No. 5,069,335, incorporated herein by reference. The metal foil layer in such a composite end member is substantially thinner than a conventional metal end member, e.g., about 0.00015 to 0.003 inch for aluminum and about 0.0005 to 0.0025 inch for steel. The particular construction of the end member is not critical to the present invention, and various other constructions can be used.

The container **10** also includes a flexible membrane closure 30 that is attached to the end member **20** by heat-sealing, in such a manner that the closure is readily peelable from the end member to open the container. The closure preferably includes a tab portion **33** that remains unattached to the end member after heat-sealing (see FIG. 2) and is positioned to be grasped and pulled to open the container. The membrane closure can be formed of various materials or combinations of different materials. The closure includes at least one structural layer of suitable material having adequate strength properties to support the forces expected to be exerted on the closure during packaging, subsequent processing (e.g., retort), and shipping and handling. Where barrier performance against oxygen and/or moisture or other substances is needed, the closure also includes at least one barrier layer (which can also be a structural layer, or can be separate from the structural layer). For instance, the closure can comprise a metal foil layer (which provides both structural properties as well as barrier performance), in which case the underside of the foil typically will have a coating of a suitable material to prevent direct contact between the container contents and the metal; such coating may constitute a heat-seal material, or may be separate and distinct from the heat-seal material provided on the closure for heat-sealing the closure to the end member. Other membrane closure constructions are possible, such as polymer film (or multiple polymer film layers laminated or coextruded together) with or without other layers such as metal foil or paper. The particular construction of the membrane closure is not critical to the present invention.

To attach the membrane closure **30** to the end member **20**, each of these components has a heat-seal material disposed thereon. As shown in FIG. 3, the closure includes a heat-seal material **31** disposed on at least that portion of the closure that contacts the end member **20**. The heat-seal material can be provided on the closure in various ways. For example, the heat-seal material can be extrusion-coated onto the closure; alternatively, a heat-seal material web can be formed separately from the closure and then laminated to the closure in conventional fashion; as still another alternative, in the case of an all-polymer closure, the heat-seal material and the other layer(s) of the closure can be coextruded simultaneously.

The end member **20** likewise has a heat-seal material **25** disposed on at least the ledge portion **23** that is contacted by the closure **30** (i.e., disposed on at least the sealing surface to which the closure is to be attached); the heat-seal material **25** can, if desired, cover the entire upper surface of the end member. There may be one or more intervening layers (not shown), such as adhesive layers, between the heat-seal material **25** and the main substrate of the end member to facilitate adhering the heat-seal material to the substrate and/or for other purposes. The presence or absence of such additional layer(s) is not critical to the present invention.

In accordance with the invention, the heat-seal material **25**, **31** comprises a blend of two different acidic ionomers having different levels of acid content. More particularly, the heat-seal material in a preferred embodiment comprises a blend of a first ionomer having an acid content of about 15% by weight, and a second ionomer having an acid content of about 7% by weight. The first and second ionomers are present in approximately equal proportions in the preferred embodiment. Preferably, the first ionomer comprises an ethylene methacrylic acid ionomer (i.e., a copolymer of ethylene and methacrylic acid wherein the methacrylic acid groups are partially neutralized with a cation, typically zinc or sodium ions), such as the composition marketed under the SURLYN® trademark by DuPont. The second ionomer preferably comprises an ethylene acrylic acid ionomer (i.e., a copolymer of ethylene and acrylic acid wherein the acrylic acid groups are partially neutralized with a cation, typically zinc or sodium ions), such as the composition marketed under the TRANCEND® trademark by DuPont. When equal proportions of these two ionomers are blended, the resulting heat-seal material has an acid content of about 11% by weight.

The reduced acid content of the heat-seal material (i.e., reduced relative to the conventional SURLYN® material that has typically been used in the past, which has a 15% acid content) has been found to lead to a reduction in the age-up phenomenon. At the same time, heat seals produced using the material still have adequate oil- and grease-resistance.

Many modifications and other embodiments of the inventions set forth herein will come to mind to one skilled in the art to which these inventions pertain having the benefit of the teachings presented in the foregoing descriptions and the associated drawings. For example, although the sealing surface to which the closure **30** is heat-sealed in the disclosed embodiment is defined on a ring-shaped end member **20** that is double-seamed to the container body, it is within the scope of the invention to provide the sealing surface in other ways, such as by integrally forming the sealing surface on the container body. Additionally, while the sealing surface is shown as being planar and normal to a longitudinal axis of the container body, alternatively the sealing surface could be shaped and/or oriented in other ways. It will also be appreciated that although a container of circular cross-section has been described, the invention is not limited to circular containers; terms such as "ring-shaped", "encircling", and the like, as used in the specification and claims, are intended to apply to both circular and non-circular objects. Therefore, it is to be understood that the inventions are not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. A container closure, comprising:
a flexible membrane closure comprising:
at least one structural layer of flexible material; and
a heat-seal material joined to the at least one structural layer and exposed at one surface of the closure for heat-sealing to a sealing surface provided on a container, the heat-seal material comprising a blend of first and second acidic ionomers having respectively higher and lower acid content such that the heat-seal material has an acid content intermediate between that of the first and second ionomers.

2. The container closure of claim 1, further comprising:
a ring-shaped end member having a curl portion configured to be attached to a flange of a container by double-seaming, the end member further comprising a portion located radially inwardly from the curl portion and defining a sealing surface;
wherein the sealing surface of the end member has said heat-seal material disposed thereon and is attached to the flexible membrane closure by heat-sealing.

3. The container closure of claim 2, in combination with:
a container body having a flange at a top opening of the container body and attached to the curl portion of the end member by double-seaming.

4. The container closure of claim 1, 2, or 3, wherein the first ionomer has an acid content of about 15% by weight and the heat-seal material has an acid content of about 11% by weight.

5. The container closure of claim 1, 2, or 3, wherein the first ionomer comprises a copolymer of ethylene and methacrylic acid wherein methacrylic acid groups are partially neutralized with a cation.

6. The container closure of claim 1, 2, or 3, wherein the second ionomer comprises a copolymer of ethylene and acrylic acid wherein acrylic acid groups are partially neutralized with a cation.

7. The container closure of claim 1, 2, or 3, wherein the first ionomer comprises a copolymer of ethylene and methacrylic acid wherein methacrylic acid groups are partially neutralized with a cation and the second ionomer comprises a copolymer of ethylene and acrylic acid wherein acrylic acid groups are partially neutralized with a cation.

8. The container closure of claim 1, 2, or 3, wherein the first and second ionomers are present in equal proportions by weight in the heat-seal material.
